# EUROPEAN PATENT SPECIFICATION

(11) **EP 2 472 103 B1**
(45) Date of publication and mention of the grant of the patent: **22.04.2015**
(21) Application number: 11195653.8
(22) Date of filing: 23.12.2011
(51) Int. Cl.: F03D 1/00

(54) **A wind turbine maintenance system and a method of maintenance therein**
Windturbinenwartungssystem und Verfahren zur Wartung darin
Système de maintenance d'éolienne et procédé de maintenance associé

(30) Priority: 28.12.2010 US 201061427485 P; 11.01.2011 DK 201170011
(43) Date of publication of application: 04.07.2012
(73) Proprietor: Vestas Wind Systems A/S, 8200 Aarhus N (DK)
(72) Inventor: Xia, Qinghua, 680233 Singapore (SG); Zhang, Tieling, 120708 Singapore (SG); Liew, Adrian, 737893 Singapore (SG)
(74) Representative: Viering, Jentschura & Partner Patent- und Rechtsanwälte

(56) References cited:
- EP-A2- 1 886 904
- WO-A1-2010/133720
- WO-A2-2010/031528

## Description

### FIELD OF THE INVENTION

The present invention relates to a wind turbine maintenance system and a method of maintenance therein.

### BACKGROUND

Wind turbines are generally gaining recognition as being a stable contributor in the push towards cleaner energy generation. As such, greater developments are being carried out and wind turbine technology, especially in the area of electrical power delivery, is constantly improving. For example, more complicated power conditioning equipment is being developed, such as intricate power semiconductor arrangements for power converters. These are typically stored in the nacelle of the wind turbine, mounted on a vertically extended tower.

The development of power converters made up of complex power semiconductor switches increase the possibility of a component failure, which may lead to power output degradation, or is worse cases, a complete stoppage of power production from the wind turbine. This leads to proper maintenance plans needing to be crafted and carried out, in order to keep wind turbine production stable. Should a component fail short of a scheduled maintenance session, this leads to turbine performing at reduced levels, or not at all, until the maintenance crew arrives.

Document WO 2010/133720 shows a prior art system and method to carry out maintenance on a wind turbine nacelle.

The present invention seeks to introduce a viable enhancement to the current maintenance scheduling schemes.

### SUMMARY OF THE INVENTION

According to an aspect of the present invention, there is provided a wind turbine maintenance system, for carrying out a maintenance task in a nacelle of a wind turbine, comprising a maintenance robot, further comprising a detection unit, for identifying a fault in a sub-system in the nacelle and generating fault information, a processor unit, adapted to receive fault information from the detection unit and control the maintenance robot to perform a maintenance task, a manipulation arm to perform the maintenance task on the identified sub-system.

According to another aspect of the invention, a method of carrying out a maintenance task in a wind turbine is provided.

### BRIEF DESCRIPTION OF THE DRAWINGS

Embodiments of the present invention are explained by way of example with reference to the accompanying drawings, in which:

Fig. 1 illustrates a general structure of a wind turbine.

Fig 2a illustrates a wind turbine electrical system.

Fig 2b illustrates the electrical layout of a power converter.

Fig. 3a illustrates a perspective view of a nacelle of a wind turbine of an embodiment.

Fig 3b illustrates a maintenance robot of Fig 3a.

Fig. 4 illustrates a partial view of the interior of the nacelle of Fig 3a.

Fig 5 illustrates a block diagram of a maintenance system according to an embodiment.

Fig 6 illustrates a flow chart describing a method of carrying out a maintenance task according to an embodiment.

### DETAILED DESCRIPTION OF AN EMBODIMENT

Certain general points are now discussed in relation to the invention.

As indicated above, a wind turbine maintenance system is provided.

The provision of such a maintenance robot in the nacelle brings autonomous robotic technology into the wind turbine and allows for enhanced serviceability and maintenance of wind turbines such that the health and state of the wind turbine is optimal at any time. The robot's capability to identify faults with a detection unit allows for flexibility of operation and allows the robot to perform some of the testing functions of a maintenance operator.

In sum, these capabilities of the maintenance robot allow for autonomous operation, and reduces the reliance of the wind turbine on regular scheduled maintenance and the necessity of a maintenance crew. Robots are well-suited to perform preprogrammed tasks, and further provide improved efficiency of tasks and increased productivity.

For offshore wind turbines, the operational cost could be significantly reduced if a robot is employed to work in turbine nacelle to carry out some necessary condition monitoring and maintenance services. In such a way, the benefit comes from significant reduction of unscheduled shutdown time and travel cost to wind farm. Further, such a maintenance system saves transportation, manpower and logistics costs for unscheduled as well as scheduled maintenance and repair.

In an embodiment, the detection unit comprises a sensor for testing a component in the nacelle. Providing the maintenance robot with a working sensor further allows the maintenance system to autonomously operate. In addition, it utilizes the flexibility and maneuverability of the maintenance robot to possibly carry out location specific testing with the sensor. In another embodiment, the sensor is any one of the following: an optical camera, a thermal camera, a thermal probe, an acoustic sensor, and a digital electronic tester.

In an embodiment, a condition monitoring system is provided, arranged to receive signals from at least one sensor on a sub-system in the nacelle, wherein the condition monitoring system provides a fault detection input to the detection unit. In the push towards optimum operation, condition monitoring systems are prevalent in wind turbines. Linking up the condition monitoring system to the maintenance system, allows the maintenance system to work in conjunction with the condition monitoring system, thereby providing a wider coverage of components under watch.

In another embodiment, the condition monitoring system provides a fault detection input corresponding to a predetermined level of sub-system degradation. This allows for the maintenance system to operate based on the health of the sub-system, and not only when a fault occurs. Such pre-emptive action reduces unwanted and unexpected down times due to sub-system failures.

In another embodiment, the processor unit is coupled to a wind turbine control network. Doing so allows the maintenance system to be in direct communication with other top level functions in the wind turbine control network. This also allows operators on external turbine watch systems to have access to the maintenance system.

In an embodiment, the manipulation means comprises a robot arm. In yet another embodiment, the manipulation means comprises a hydraulically actuated robot arm. Such hydraulically actuated robot arms allow for greater lifting capability, which is required in certain cases due to the weight of components.

In an embodiment, the maintenance robot further comprises movement means to enable access to the identified sub-system. Such means may comprise tracks on rails, the rails being on the ceiling or on walls. Alternatively, the robot could comprise wheels on the floor of the nacelle. Magnetic adhesion could as well be a viable option. In another embodiment, the maintenance robot is movably mounted on a track system provided on the ceiling of the nacelle.

In an embodiment, the maintenance robot further comprises an alignment unit, for aligning the robot to the identified sub-system in a correct maintenance position. This provides the robot with means to match itself to the identified sub-system in order to carry out the required maintenance tasks. In another embodiment, the alignment unit comprises any one of a machine vision unit, a coordinate triangulation system, and an inertial sensor for aligning the robot, thereby providing a higher level of accuracy for precise maintenance operations.

In an embodiment, the alignment unit performs an alignment in correspondence to predetermined datum points stored in the maintenance robot processor unit.

In an embodiment, the maintenance robot is operated remotely. This allows an operator to take over manipulation of the maintenance robot for even more precise operation, or perhaps for on-site troubleshooting. This function, together with machine vision on the robot, provides the operator with a pair of eyes inside the wind turbine and relieves, in many circumstances, the need for actual maintenance personnel to be in the turbine.

In an embodiment, the wind turbine maintenance system comprises multiple maintenance robots in operation. This allows the system to have different robots to serve different sub-systems in the wind turbine.

In an aspect of the invention, a method of carrying out a maintenance task in a wind turbine is provided, comprising the steps of identifying a fault in a sub-system in the nacelle with a detection unit in a maintenance robot, generating fault information based on the identified fault, processing the fault information to generate a maintenance task for the maintenance robot, and performing a maintenance task on the identified sub-system with the maintenance robot.

In an embodiment, an input from a sensor in the detection unit is obtained to identify a fault in the sub-system.

In an embodiment, a fault detection input from a condition monitoring system is provided to the detection unit to be used in identifying a fault.

In an embodiment, robot arms are utilized to perform the maintenance task

In an embodiment, the maintenance robot is moved to access the identified sub-system. In an embodiment, the robot moves on a track system on the ceiling of the nacelle.

In an embodiment, the robot is aligned to the identified sub-system in a correct maintenance position.

In an embodiment, identification of a fault is carried out after a disconnection of the wind turbine from an electrical grid.

In an embodiment, the detection unit performs a post-maintenance test on the identified sub-system after the maintenance task is performed.

An embodiment of the present invention will now be described with relation to the figures.

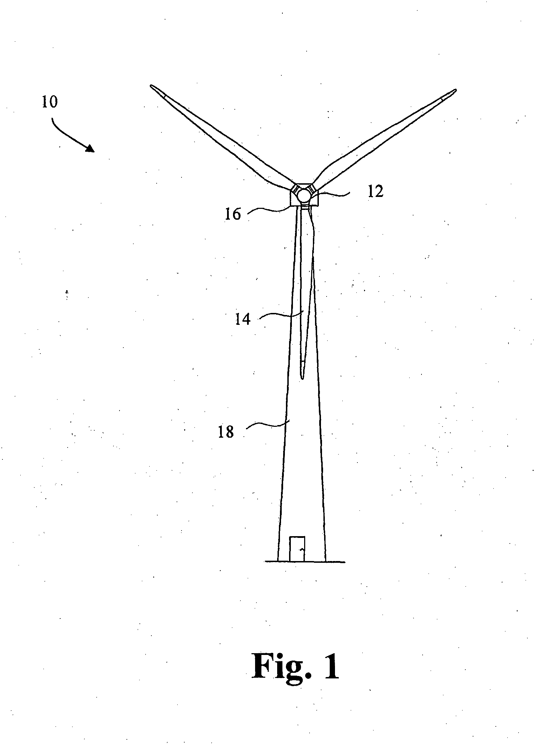

A wind turbine 10 is illustrated in Fig. 1. The wind turbine 10 comprises a hub 12 connected to at least one blade 14. Any number of blades may be used, but there are typically provided three blades 14. The hub 12 is rotatably mounted on a nacelle 16 and may otherwise be known as a rotor. The nacelle 16 is supported by a tower 18, which is established on a stable surface. Alternatively, the wind turbine may be an offshore model, the tower 18 of such an offshore model being installed either on the sea floor or on platforms stabilized on or above the sea level.

The wind turbine 10 comprises mechanisms for adjusting the pitch of the blade 14 to increase or reduce the amount of wind energy captured by the blade 14. Pitching adjusts the angle at which the wind strikes the blade 14. The hub 12 typically rotates about a substantially horizontal axis along a drive shaft 20 extending from the hub 12 to the nacelle 16. The drive shaft is usually coupled to a rotor of a generator by a gear box 24 both of which are housed in the nacelle 16.

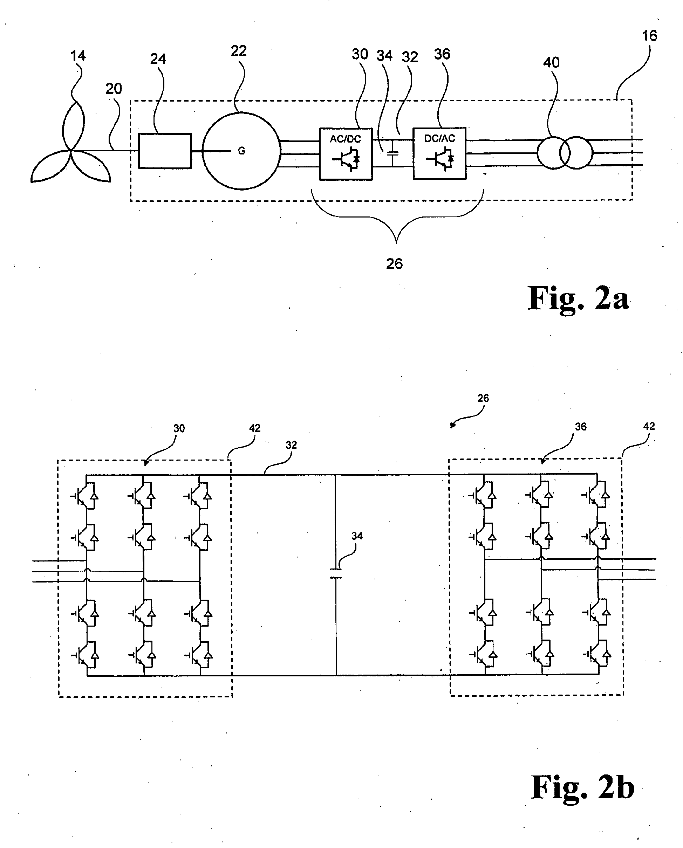

Fig 2a shows an electrical system of a wind turbine 10 according to an embodiment. The blades 14 capture wind energy which is translated to mechanical energy through the rotation of the drive shaft 20, for conversion to electrical energy by the generator 22. The generator is thereafter coupled to a power converter 26, and this allows for a variable speed operation of the drive shaft, while also providing a conditioning of the power generated by the generator. In this embodiment, the power converter 26 is an AC/DC/AC power converter. The generator 22 and the power converter 26 operates at a low voltage level and a power transformer 40 is provided to step up the conditioned generated power for delivery from the wind turbine 10. In other embodiments, there may be multiple power converters being coupled to the electrical generator, to provide greater power output.

The generator 22, power converter 26 and the power transformer 40 are all located in the nacelle 16, together with a multitude of other components, both mechanical and electrical, which are necessary to maintain operation of the wind turbine 10. With such complexity in the wind turbine 10, any push towards the reliability and maintained operation of the wind turbine 10 has to take into account the optimum operation of the various components in the wind turbine 10.

As earlier mentioned, the push for turbines to provide more power and at a higher quality has led to more complicated power production systems and in particular, more complex power semiconductor switch arrangements within the power converter 26. Fig 2b shows the electrical layout of the power converter 26. The power converter 26 comprises a machine-side converter 30 operating as an active pulse-width-modulated (PWM) rectifier. The machine-side converter 30 rectifies the AC electrical power from the generator to a direct-current (DC) electrical power, which in turn provides electrical power to a DC link 32. The DC link 32 includes a DC link capacitor 34, for smoothing power on the DC link 32. The DC link 32 could alternatively be of a different configuration, for example having inductors or capacitor banks. The DC link 32 thereafter feeds the DC power to the grid-side converter 36 operating as an inverter. The machine-side converter 30 and the grid-side converter 36 both comprise electronic switches to achieve the desired functionality, the electronic switches typically being semiconductor switches. The components within the power converter 26 are usually controlled and managed by a control unit which is well known in the art and will not be discussed in detail in this disclosure. Physically, the machine-side converter 30 and the grid-side converter 36 are provided in a power module 42 comprising the actual semiconductor switches within the package.

In the present embodiment, there is provided a maintenance system with the intention of maintaining the power converter 26 at an optimum level for power production. In other embodiments, other components of the wind turbine may be addressed by the maintenance system, for example, the generator, the gear box, the transformer, the cooling system, etc. Other embodiments may also provide a maintenance system which maintains more than one component of the wind turbine 10.

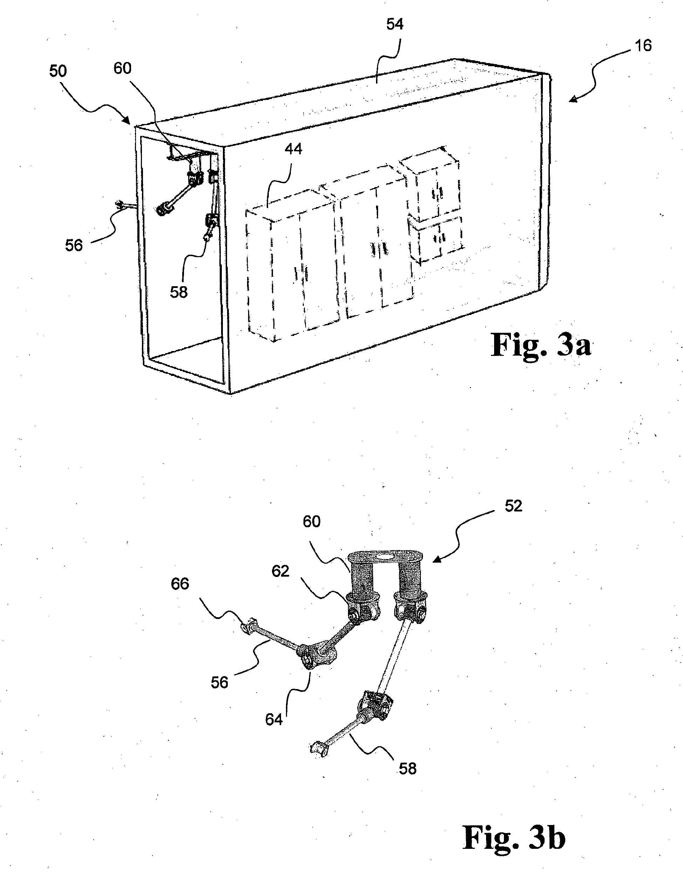

Fig. 3a illustrates a nacelle 16 of a wind turbine 10 of an embodiment of the invention. Nacelle 16 is illustrated to show the object of the wind turbine maintenance system of the present invention, namely the power converter 26. Power converter 26 comprises multiple switch arrangements provided within power modules 42 and are housed within a converter cabinet 44. Power modules 42 are built in such a way that the module can be installed or removed from the converter cabinet 44 in a plug-and-play configuration. Should an electrical switch within the power module 42 fail, the failed power module may be removed and another similar power module may be installed without much complication.

Maintenance system 50 comprises a robot 52, the robot 52 being movably mounted on a track 54 provided on the ceiling of the nacelle 16. The track 54 is longitudinally coupled to the ceiling of the nacelle, in order to provide the robot 52 with lateral access to the converter cabinet 44. In other embodiments, the track could be expanded to encompass multiple longitudinal and lateral tracks as well as vertical tracks, in order to provide closer access to multiple components within the nacelle 16. The robot 52 is mounted with simple roller bearings onto the track, but mounting means could be of any form to allow movement of the robot 52 to access various sub-systems in the wind turbine 10.

Robot 52 comprises a pair of manipulation arms 56, 58 for use in performing maintenance tasks on the power converter 26. Fig 3b illustrates a close up view of robot 52, and in particular the manipulation arms 56, 58. Base 60 provides a vertical shaft for receiving a manipulation arm 56 and the arm 56 is mounted onto base 60 by means of a rotatable joint 62. The rotatable joint 62 is both rotatable about the vertical axis of the shaft of the base 60 as well as a horizontal axis, which allows a three-dimensional movement of the arm 56.

An elbow joint 64, which is similar to the rotatable joint 62, allows for even greater mobility of the manipulation arm 56, thereby allowing more extension and maneuverability for maintenance access. At the end of arm 56 is an end-effector 66, which is adaptable to receive different sets of tools with respect to the type of action which is to be performed. For example, a screw driver could be affixed to the end-effector 66 to loosen or tighten screws, a pincer grip may be affixed to remove a component, or a test probe could be attached perform testing on a component. Many other possibilities may be possible and will be discussed later.

Dual manipulation arms 56, 58 are provided for robot 52, but a single manipulation arm may be provided in other embodiments. Manipulation arms 56, 58 are similar in this embodiment, but may be of differing configurations in other embodiments. In other embodiments, portions of the manipulation arm may also be extendable to provide greater reach. In yet other embodiments, direct probes, mounting/dismounting levers or even refueling tubes may be provided as manipulation means. In another embodiment, the robot arm is a motorized robot arm. In yet another embodiment, the robot arm is a hydraulically actuated robot arm. In other embodiments, the manipulation arm type could be articulated or Cartesian type.

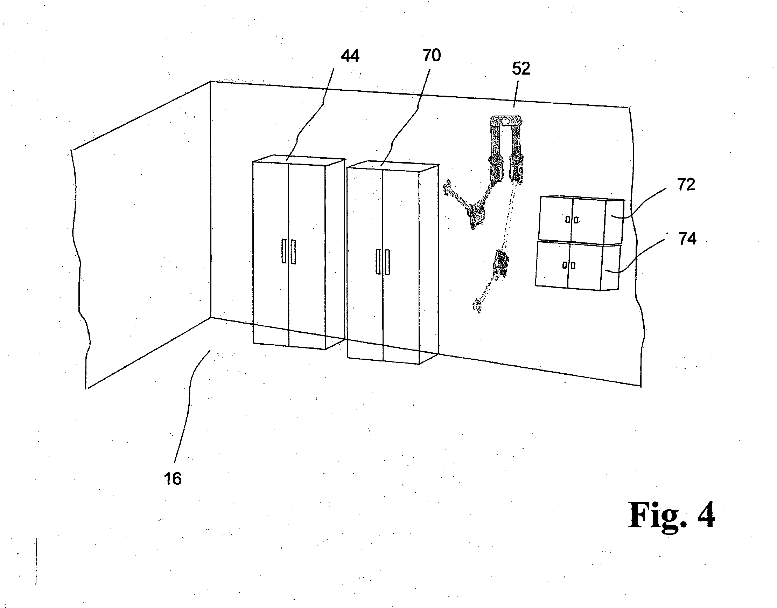

Fig. 4 illustrates a partial view of the interior of nacelle 16. A control cabinet 70 is placed alongside converter cabinet 44 on a wall of the nacelle 16. The control cabinet 70 generally houses the wind turbine controllers, such as the safety system controller, pitch controller, yaw controller, etc. The control cabinet 70 houses most of the hardware of the wind turbine control systems. In the present embodiment, control cabinet 70 also houses the central processing components of a wind turbine condition monitoring system. The condition monitoring system of the present invention monitors at least certain characteristics of the power converter 26 to ascertain operational health of the power converter 26.

In the embodiment, the power converter cabinet 44 is provided with a temperature sensor. The temperature sensor monitors the temperature of the power modules 42 within the cabinet 44 and data which is collected from the temperature sensor is sent back to the condition monitoring system. The condition monitoring system thereafter compiles the data and determines whether a fault is present within the power converter, based at least on the collected data. It may be noted that power converters typically have a dedicated power converter controller, which monitors power output and various other electrical signals in the power converter. The power converter controller is usually coupled as an input to the wind turbine condition monitoring system. The wind turbine control system may also be configured to provide input on certain components to the condition monitoring system.

In another embodiment, the condition monitoring system provides a fault detection input corresponding to a predetermined level of sub-system degradation based on the collected data. This form of condition monitoring falls under what is commonly known as preventive maintenance, wherein service is tailored to the health of the component instead of predefined service schedules. Typically, collected data is matched up with a database of previously collated data which act as a benchmark. This provides an insight to the health of the component under test. At a predetermined level of degradation, a fault detection input is then issued by the condition monitoring system.

In other embodiments, a temperature sensor may be directly mounted on a component of the power converter 26, for example on the DC link capacitor 34. In other components, voltage sensors might be provided to detect whether voltage leaks may be present in the power converter 26. Other characteristics may also be monitored.

Also provided on the wall of the nacelle 16 are two smaller cabinets - a maintenance robot control cabinet 72 and a maintenance cabinet 74. The maintenance robot control cabinet 72 houses the processor unit 82 of the maintenance robot 52. The control cabinet 72 also houses a tool box for the maintenance robot, comprising multiple accessories for performing maintenance tasks, such as screwdrivers, wrenches and the accompanying fasteners. The tool box also houses various test equipment for adapting onto the end-effector 66 of the manipulation arm 56.

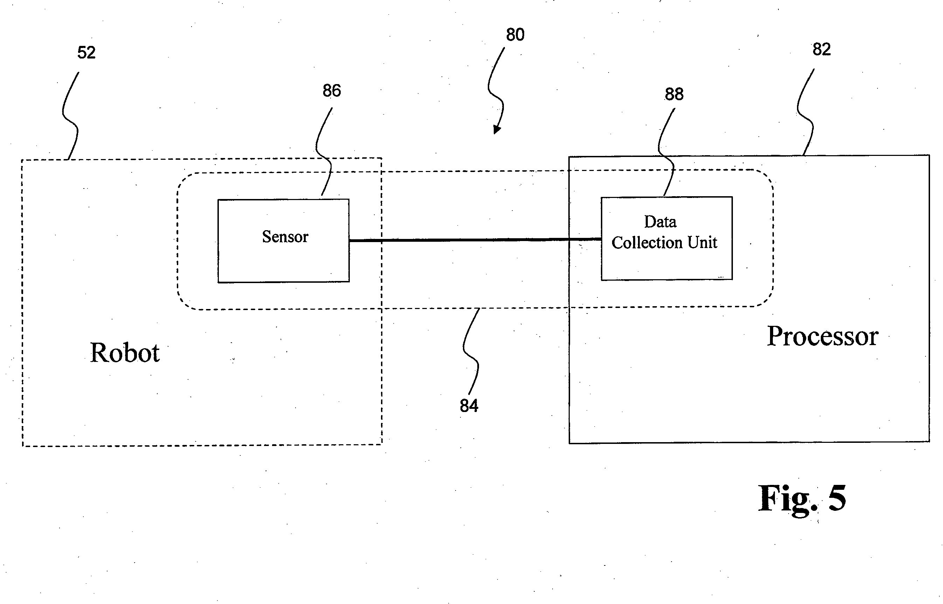

In an embodiment, the maintenance robot 52 is provided with a detection unit. This may be described in accordance with Fig 5, which shows a control block diagram 80 of the maintenance system 50. Maintenance robot 52 is provided with a detection unit 84 which comprises a sensor 86 being adapted onto manipulation arm 56, and a data collection unit 88, which is adapted into the maintenance processor unit 82.

In the embodiment, a test probe attached to the end-effector 66 at the end of robot arm 56. The test probe may be used to check for faulty connections in the power converter 26. The test probe thereafter sends back all collected test information to the data collection unit 88. Other test sensors may be used as part of the detection unit 84, for example an optical camera, a thermal camera, a thermal probe, an acoustic sensor, and a digital electronic tester such as a digital multi-meter, a capacitance meter, an LCR (Inductance, Capacitance, Resistance) meter, an Electromotive force (EMF) meter, an electrometer.

Data collection unit 88 receives input from sensor 86 and the collected data is then analyzed by maintenance processor unit 82 which determines, by correlating with pre-loaded performance data, whether a fault is present in the power converter 26. As a complement to the maintenance system, the wind turbine condition monitoring system also provides a fault detection input to the data collection unit 88, thereby providing a wider coverage of operational characteristics which can be monitored and therefore maintained.

Maintenance processor unit 82 not only analyzes and determines whether a fault is present, and also determines and provides the control of the robot arms 56 and 58. The processor unit 62 is coupled by communication and power lines to the robot arms 56 and 58 and provides signals to control the movement and operation of the robot arms. An advantage of physically separating the processing and control for the actual physical maintenance robot is that the robot can actually be replaced with a different model, should the need arise, without much complication in needing to replacing the control system. In another embodiment, the maintenance system utilizes multiple maintenance robots, mounted on a network of tracks. Such robots may be dedicated for a certain task, for example, there is a robot for inspection, one for repair, and one for cleaning, etc. In another embodiment, the maintenance processing unit is physically located on the maintenance robot, thereby allowing a functional maintenance unit.

Referring back to Fig 4, maintenance cabinet 74 houses spare parts of various component systems. In particular, as power converter 26 is composed of multiple semiconductor power modules comprising semiconductor switches in various configurations, spare power modules are provided in the maintenance cabinet 74. Also, other electronic components necessary to install the power modules may also be provided in the maintenance cabinet. In other embodiments, the maintenance cabinet 74 may house spare parts for other components, and may also comprise hydraulic fluid packages should one of the maintenance tasks be to top up hydraulic fluid in for example the yaw system.

The maintenance robot 52 is movable back and forth on the track 54 from the maintenance robot control cabinet 72 or maintenance cabinet 74 to the power converter cabinet 44, at a position allowing access by the manipulation arms 56, 58.

Operation of the wind turbine maintenance system 50 according to an embodiment is described as follows. Upon experiencing a fault in a component of the wind turbine, leading to shutdown and disconnection from the grid, the maintenance robot 52 is activated and tasked to identify the faulty component by means of the detection unit 84, the detection unit 84 comprising of a multi-meter test probe affixed onto end-effector 66 of manipulation arm 56. Typically, the maintenance system 50 works in conjunction with the condition monitoring system of the wind turbine, which sends as much input as possible in order to determine the faulty component.

In this case, the fault is assumed to be a failed semiconductor switch in a power module 42 in the power converter 26. Typically, the converter controller would be able to identify the failed semiconductor switch and the corresponding failed power module 42, but if this is not ascertained by the converter controller or the condition monitoring system, the detection unit 84 can be tasked to test the connected power modules in order to identify the fault.

In order to do so, the maintenance robot 52 is provided with an alignment unit (not shown) which is used to align the robot to the identified sub-system, in this case, the power converter 26, in a correct maintenance or testing position. The alignment unit provides the robot 52 with the capability to correctly identify the device for testing, as well provide certainty of the location of the testing. In the present embodiment, the alignment unit comprises a machine vision unit and a coordinate triangulation system for aligning the robot. The machine vision unit is an optical camera with demarcated segments which matches up to a coordinate triangulation system. Component identification, robot alignment, and robot control are all handled with the maintenance system processor unit 82. Robot alignment is provided by at least matching the captured view from the machine vision unit with component alignment data which is pre-loaded into the processor unit 82. In another embodiment, the alignment unit may be an optical sensor or may even be predefined points on the tracks together with prepared settings of the manipulation arms 56, 58.

In another embodiment, the alignment unit of the maintenance robot 52 is provided with an inertial sensor, which is used to define the correct orientation of the robot 52 and arms 56, 58 for alignment. The inertial sensor comprises a plurality of gyroscopes to determine the orientation.

Once the robot 52 is correctly aligned, the manipulation arm 56 can then conduct simple testing of the power modules 42 at predefined testing points to determine proper operation of the modules. Testing data from the sensor 86, in this case a multi-meter test probe, is sent back to the data collection unit 88 to be processed and correlated to compiled data. The faulty component is thus identified with the maintenance system 50.

Upon identification of the faulty component, the maintenance system 50 then enters a repair phase in which it attempts to repair or replace the faulty component. By means of input from the detection unit 84, together with input from the wind turbine condition monitoring system, the maintenance system processing unit determines a maintenance task, for example to replace the faulty component. The robot 52 thus moves along track 54 towards cabinets 72, 74, wherein alignment is again carried out in order to access the cabinets 72, 74.

The robot 52 initially accesses the maintenance robot control cabinet, in order to remove the multi-meter test probe from manipulation arm 56, and to mount tools required to remove the existing faulty power module from the converter cabinet 44. For example, a wrench is mounted onto arm 56 while a gripper is mounted onto arm 58. The robot 52 then repositions itself adjacent the converter cabinet 44 and undergoes the alignment process with respect to the identified faulty power module. Once aligned, the manipulation arm 56 begins the act of disconnecting the faulty power module by unfastening nuts securing the power module with the wrench. When the faulty power module is disconnected from the converter cabinet 44, manipulation arm 58 with the gripper takes a hold of the power module and removes it from the cabinet 44.

The robot 52 then moves back towards the maintenance cabinet 74 and places the faulty power module in the cabinet, and marks it appropriately. A spare power module is picked up and the removal process is reversed in installing the new power module into the power converter 26 and into the converter cabinet 44.

After installation, the robot 52 switches tools again to the multi-meter test probe and the detection unit carries out a post-maintenance test, in this case an electrical connection check, to ensure that the power module is correctly connected and is in working condition. The maintenance system 50 also links up with the converter controller to run an initialization test to confirm that the repaired power converter 26 is in working condition. On confirmation, a signal is sent to the wind turbine controller to start up the wind turbine 10 and to initiate reconnection to the power grid.

With such a maintenance system, wind turbine downtime due to faulty components or sub-systems can be drastically reduced as the autonomous maintenance system attempts to repair the system almost immediately after the fault, instead of the typical days or weeks before the service crew can reach the wind turbine which is shut down due to a fault.

In another embodiment, the maintenance system 50 of the wind turbine 10 is linked up to a central monitoring server. This allows for an operator at a remote site, perhaps a data center, to link up with the maintenance system 50. The operator is then able to gain access to monitoring logs as well as testing results. Further, the operator may also take over remote operation of the maintenance robot 52 to carry out the maintenance task, if the task is too complicated for pre-programming into the maintenance system. Remote operation could also occur in the case where delicate handling of the sub-system components may be required.

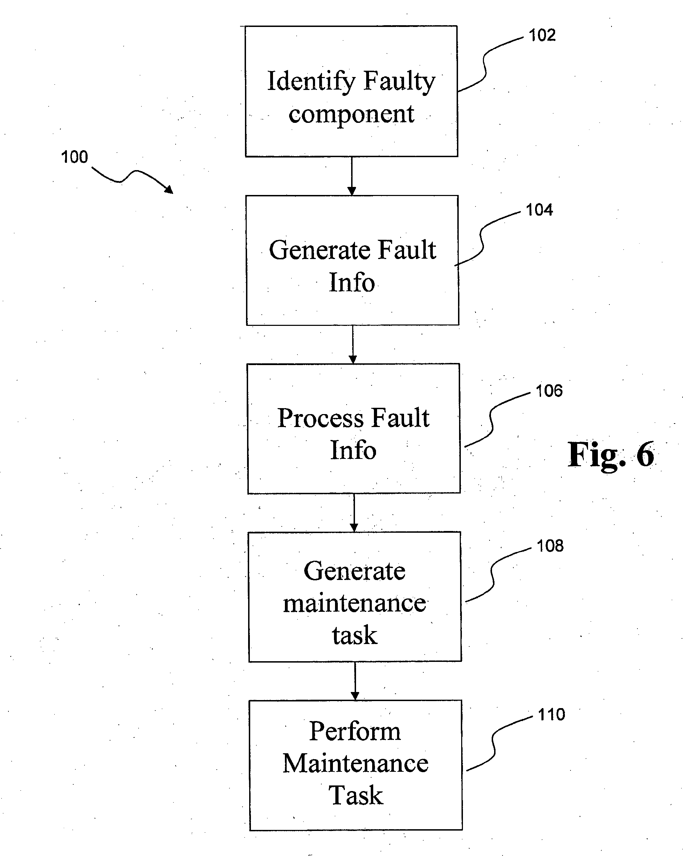

Fig 6 illustrates a flow chart 100 describing a method of carrying out a maintenance task according to an aspect. At 102, a step of identifying a fault in a sub-system in the nacelle with a detection unit of a maintenance robot is carried out. At 104, fault information based on the identified fault is generated. At 106, the fault information is processed by a maintenance processing unit and at 108, a maintenance task is generated for the maintenance robot. At 110, the maintenance task is performed on the identified sub-system with the maintenance robot.

It should be noted that in addition to the exemplary embodiments of the invention shown in the accompanying drawings, the invention may be embodied in different forms and should not be construed as limited to the embodiments set forth herein. Rather, these embodiments are provided so that this disclosure will be thorough and complete, and will fully convey the concept of the invention to those skilled in the art. The scope of the invention is thus indicated by the appended claims and all changes which come within the meaning and range of equivalency of the claims are therefore intended to be embraced.

## Claims

1. A wind turbine maintenance system, for carrying out a maintenance task in a nacelle of a wind turbine, comprising
a maintenance robot, further comprising
a detection unit, for identifying a fault in a sub-system in the nacelle and generating fault information,
a processor unit, adapted to receive fault information from the detection unit and control the maintenance robot to perform a maintenance task,
a manipulation arm to perform the maintenance task on the identified sub-system.

2. A wind turbine maintenance system according to claim 1, wherein the detection unit comprises a sensor for testing a component in the nacelle, and wherein the sensor is any one of the following: an optical camera, a thermal camera, a thermal probe, an acoustic sensor, and a digital electronic tester.

3. A wind turbine maintenance system according to claims 1 or 2, further comprising a condition monitoring system, arranged to receive signals from at least one sensor on a sub-system in the nacelle, wherein the condition monitoring system provides a fault detection input to the detection unit.

4. A wind turbine maintenance system according to claim 3, wherein the condition monitoring system provides a fault detection input corresponding to a predetermined level of sub-system degradation.

5. A wind turbine maintenance system according to any of the preceding claims, wherein the processor unit is coupled to a wind turbine control network.

6. A wind turbine maintenance system according to any of the preceding claims, wherein the maintenance robot is movably mounted on a track system to enable access to the identified sub-system.

7. A wind turbine maintenance system according to any of the preceding claims, wherein the maintenance robot further comprises an alignment unit, for aligning the robot to the identified sub-system in a correct maintenance position.

8. A wind turbine maintenance system according to claim 7, wherein the alignment unit comprises any one of a machine vision unit, a coordinate triangulation system and an inertial sensor for aligning the robot.

9. A wind turbine maintenance system according to claims 7 or 8, wherein the alignment unit performs an alignment in correspondence to predetermined datum points stored in the maintenance robot processor unit.

10. A wind turbine maintenance system according to any of the preceding claims, wherein the maintenance robot is operated remotely.

11. A method of carrying out a maintenance task in a wind turbine, comprising
identifying a fault in a sub-system in the nacelle with a detection unit in a maintenance robot,
generating fault information based on the identified fault,
processing the fault information to generate a maintenance task for the maintenance robot, and
performing a maintenance task on the identified sub-system with the maintenance robot.

12. A method according to claim 11, further comprising providing a fault detection input from a condition monitoring system to the detection unit to be used in identifying a fault.

13. A method according to claims 11 or 12, further comprising aligning the robot to the identified sub-system in a correct maintenance position.

14. A method according to any of claims 11 to 13, wherein identifying a fault is carried out after a disconnection of the wind turbine from an electrical grid.

15. A method according to any of claims 11 to 14, wherein the detection unit performs a post-maintenance test on the identified sub-system after the maintenance task is performed.

## Patentansprüche

1. Windturbinenwartungssystem zum Ausführen einer Wartungsaufgabe in einer Gondel einer Windturbine, wobei das System umfasst:
einen Wartungsroboter, der ferner umfasst:
eine Detektionseinheit, um einen Fehler in einem Untersystem in der Gondel zu identifizieren und eine Fehlerinformation erzeugen,
eine Prozessoreinheit, die dafür ausgelegt ist, eine Fehlerinformation von der Detektionseinheit zu empfangen und den Wartungsroboter zu steuern, um eine Wartungsaufgabe durchzuführen,
einen Bedienungsarm, um die Wartungsaufgabe an dem identifizierten Untersystem durchzuführen.

2. Windturbinenwartungssystem nach Anspruch 1, wobei die Detektionseinheit einen Sensor zum Testen einer Komponente in der Gondel umfasst, und wobei der Sensor irgendeiner von den folgenden ist: eine optische Kamera, eine thermische Kamera, eine thermische Sonde, ein akustischer Sensor und eine digitale elektronische Testvorrichtung.

3. Windturbinenwartungssystem nach Anspruch 1 öder 2, das ferner ein Zustandsüberwachungssystem umfasst, das angeordnet ist, um Signale von mindestens einem Sensor auf einem Untersystem in der Gondel zu empfangen, wobei das Zustandsüberwachungssystem eine Fehlerdetektionseingabe an die Detektionseinheit bereitstellt.

4. Windturbinenwartungssystem nach Anspruch 3, wobei das Zustandsüberwachungssystem eine Fehlerdetektionseingabe entsprechend einem vorgegebenen Grad einer Verschlechterung bereitstellt.

5. Windturbinenwartungssystem nach einem der vorhergehenden Ansprüche, wobei die Prozessoreinheit an ein Steuernetzwerk einer Windturbine gekoppelt ist.

6. Windturbinenwartungssystem nach einem der vorhergehenden Ansprüche, wobei der Wartungsroboter an einem Schienensystem beweglich befestigt ist, um einen Zugang zu dem identifizierten Untersystem zu ermöglichen.

7. Windturbinenwartungssystem nach einem der vorhergehenden Ansprüche, wobei der Wartungsroboter ferner eine Ausrichteinheit umfasst, um den Roboter auf das identifizierte Untersystem in einer korrekten Wartungsposition auszurichten.

8. Windturbinenwartungssystem nach Anspruch 7, wobei die Ausrichteinheit eine Bildverarbeitungseinheit oder ein System einer Koordinatendreieckmessung oder einen Trägheitssensor für eine Ausrichtung des Roboters umfasst.

9. Windturbinenwartungssystem nach einem der Ansprüche 7 oder 8, wobei die Ausrichtung eine Ausrichtung entsprechend den vorgegebenen Bezugspunkten, die in der Prozessoreinheit für den Wartungsroboter gespeichert sind, durchführt.

10. Windturbinenwartungssystem nach einem der vorhergehenden Ansprüche, wobei der Wartungsroboter entfernt betrieben wird.

11. Verfahren zum Ausführen einer Wartungsaufgabe in einer Windturbine, das umfasst:
Identifizieren eines Fehlers in einem Untersystem in der Gondel mit einer Detektionseinheit in einem Wartungsroboter,
Erzeugen einer Fehlerinformation auf der Basis des identifizierten Fehlers,
Verarbeiten der Fehlerinformation, um eine Wartungsaufgabe für den Wartungsroboter zu erzeugen, und
Durchführen einer Wartungsaufgabe an dem identifizierten Untersystem mit dem Wartungsroboter.

12. Verfahren nach Anspruch 11, das ferner ein Bereitstellen einer Fehlerdetektionseingabe von einem Zustandsüberwachungssystem an die Detektionseinheit umfasst, um beim Identifizieren eines Fehlers verwendet zu werden.

13. Verfahren nach Anspruch 11 oder 12, das ferner ein Ausrichten des Roboters auf das identifiziere Untersystem in einer korrekten Wartungsposition umfasst.

14. Verfahren nach einem der Ansprüche 11 bis 13, wobei das Identifizieren eines Fehlers nach einer Verbindungstrennung der Windturbine von einem elektrischen Netz ausgeführt wird.

15. Verfahren nach einem der Ansprüche 11 bis 14, wobei die Detektionseinheit einen Nachwartungstest an dem identifizierten Untersystem durchführt, nachdem die Wartungsaufgabe durchgeführt worden ist.

## Revendications

1. Système de maintenance d'éolienne, pour effectuer une tâche de maintenance dans une nacelle d'une éolienne, comprenant
un robot de maintenance, comprenant en outre
une unité de détection, pour identifier une panne dans un sous-système dans la nacelle et produire des informations de panne,
une unité de processeur, conçue pour recevoir des informations de panne en provenance de l'unité de détection et pour commander le robot de maintenance pour effectuer une tâche de maintenance,
un bras de manipulation pour effectuer la tâche de maintenance sur le sous-système identifié.

2. Système de maintenance d'éolienne selon la revendication 1, dans lequel l'unité de détection comprend un capteur pour évaluer un composant dans la nacelle, et dans lequel le capteur est n'importe lequel de ce qui suit : un appareil optique de prise de vues, un appareil thermique de prise de vues, une sonde thermique, un capteur acoustique, et un appareil de contrôle électronique numérique.

3. Système de maintenance d'éolienne selon les revendications 1 ou 2, comprenant en outre un système de contrôle d'état, agencé pour recevoir des signaux en provenance d'au moins un capteur sur un sous-système dans la nacelle, dans lequel le système de contrôle d'état fournit une entrée de détection de panne à l'unité de détection.

4. Système de maintenance d'éolienne selon la revendication 3, dans lequel le système de contrôle d'état fournit une entrée de détection de panne correspondant à un niveau prédéterminé de dégradation de sous-système.

5. Système de maintenance d'éolienne selon l'une quelconque des revendications précédentes, dans lequel l'unité de processeur est reliée à un réseau de commande d'éolienne.

6. Système de maintenance d'éolienne selon l'une quelconque des revendications précédentes, dans lequel le robot de maintenance monté est de façon mobile sur un système de piste pour permettre l'accès au sous-système identifié.

7. Système de maintenance d'éolienne selon l'une quelconque des revendications précédentes, dans lequel le robot de maintenance comprend en outre une unité d'alignement, pour aligner le robot sur le sous-système identifié dans une position de maintenance correcte.

8. Système de maintenance d'éolienne selon la revendication 7, dans lequel l'unité d'alignement comprend n'importe lequel d'une unité de vision de machine, d'un système de triangulation de coordonnées et un capteur inertiel pour aligner le robot.

9. Système de maintenance d'éolienne selon les revendications 7 ou 8, dans lequel l'unité d'alignement effectue un alignement en correspondance à des points de donnée prédéterminés stockés dans l'unité de processeur de robot de maintenance.

10. Système de maintenance d'éolienne selon l'une quelconque des revendications précédentes, dans lequel le robot de maintenance est mis en oeuvre à distance.

11. Procédé d'exécution d'une tâche de maintenance dans une éolienne, comprenant
l'identification d'une panne dans un sous-système dans la nacelle avec une unité de détection dans un robot de maintenance,
la production d'informations de panne en se basant sur la panne identifiée,
le traitement des informations de panne pour créer une tâche de maintenance pour le robot de maintenance, et
l'exécution d'une tâche de maintenance sur le sous-système identifié avec le robot de maintenance.

12. Procédé selon la revendication 11, comprenant en outre la fourniture d'une entrée de détection de panne depuis un système de contrôle d'état vers l'unité de détection à utiliser dans l'identification d'une panne.

13. Procédé selon les revendications 11 ou 12, comprenant en outre l'alignement du robot sur le sous-système identifié dans une position de maintenance correcte.

14. Procédé selon l'une quelconque des revendications 11 à 13, dans lequel l'identification d'une panne est effectuée après une déconnexion de l'éolienne d'un réseau électrique.

15. Procédé selon l'une quelconque des revendications 11 à 14, dans lequel l'unité de détection effectue un test de post-maintenance sur le sous-système identifié après que la tâche de maintenance est effectuée.
